# EUROPEAN PATENT APPLICATION

(11) **EP 2 765 743 A1**
(43) Date of publication of application: **13.08.2014**
(21) Application number: 12857261.7
(22) Date of filing: 11.12.2012
(51) Int. Cl.: H04L 12/733, H04L 12/66

(54) **LAYER 2 INTER-CONNECTING METHOD, APPARATUS AND SYSTEM BASED ON IPV6**

(30) Priority: 12.12.2011 CN 201110412167
(71) Applicant: Huawei Technologies Co., Ltd, Shenzhen, Guangdong 518129 (CN)
(72) Inventor: CHEN, Xiaolei, Shenzhen Guangdong 518129 (CN); DAI, Wenlei, Shenzhen Guangdong 518129 (CN); XIA, Lin, Shenzhen Guangdong 518129 (CN)
(74) Representative: Goddar, Heinz J.
(86) International application number: PCT/CN2012/086361
(87) International publication number: WO 2013/086966

(57) **Abstract**

The present invention discloses a method, an apparatus, and a system for a layer 2 interworking based on an IPv6. The method includes: receiving a router solicitation packet of the first terminal device, and sending a router advertisement packet to the first terminal device, where: the router advertisement packet carries a prefix option including an AdvOnlink tag and a management tag, so that the first terminal device generates a direct route to the second terminal device according to the AdvOnlink tag, and the management tag is used to direct the first terminal device to adopt a DHCP to obtain an IP address. The method, apparatus, and system provided in the present invention may implement the direct route between terminal devices to which IPv6 addresses with a same prefix are assigned by a same DHCP server.

## Description

### CROSS-REFERENCE TO RELATED APPLICATION

This application claims priority to Chinese Patent Application No. 201110412167.5, filed with the Chinese Patent Office on December 12, 2011 and entitled "METHOD, APPARATUS, AND SYSTEM FOR LAYER 2 INTERWORKING BASED ON IPV6", which is incorporated herein by reference in its entirety.

### TECHNICAL FIELD

The present invention relates to the field of communications technologies, and in particular, to a method, an apparatus, and a system for a layer 2 interworking based on an IPv6 (Internet Protocol version 6, Internet protocol version 6).

### BACKGROUND

A DHCP (Dynamic Host Configuration Protocol, Dynamic Host Configuration Protocol) is used to assign an IP address and other network information to a computer, so that the computer may automatically communicate on a network.

The DHCP defines two interaction modes.

### 1. A terminal device interacts with a DHCP server by using two packets.

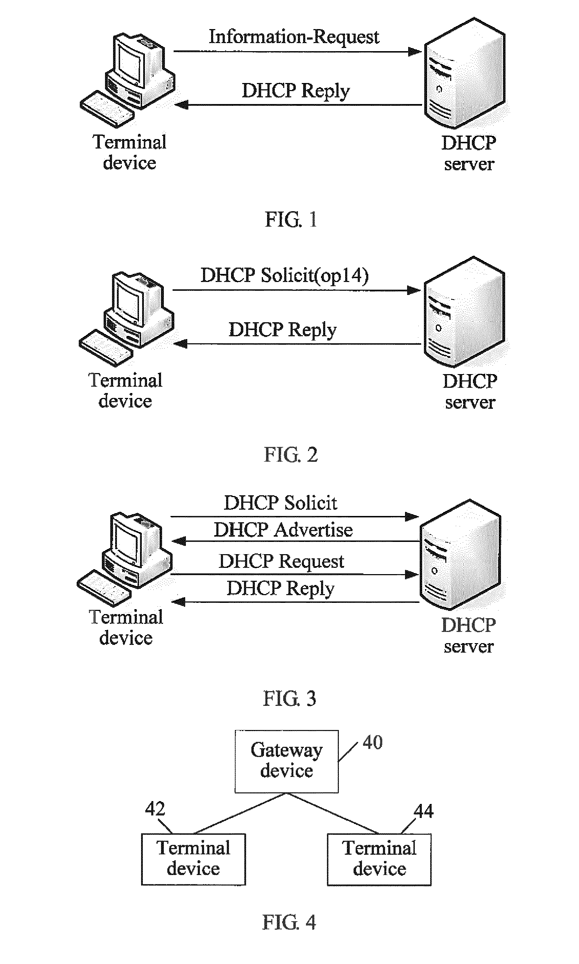

When the terminal does not need to obtain the IP address from the DHCP server, the terminal may initiate an Information-Request packet to directly obtain information such as a DNS (Domain Name System, domain name system) and an NTP (Network Time Protocol, network time protocol) server address from the DHCP server. As shown in FIG 1, the DHCP server sends the information such as the DNS and an NTP server address to the terminal device by using a DHCP Reply packet.

When the DHCP server has assigned the IP address and configuration information to the terminal device, the terminal device may, by sending a DHCP Solicit packet carrying Option 14 (OPTION_RAPID_COMMIT), require the DHCP server to immediately reply. As shown in FIG 2, the DHCP server, after receiving the packet, immediately returns the DHCP Reply packet including the IP address and the configuration information.

### 2. The terminal device interacts with the DHCP server by using four packets.

When the terminal device needs to obtain one or more IP addresses, the terminal device needs to send the DHCP Solicit packet to locate the DHCP server first, and request the DHCP server by using a DHCP Request packet to assign the IP address and the configuration information to the terminal device, where the DHCP Solicit packet is sent to all of the DHCP servers (FF02::1:2). After any DHCP server on a link receives the DHCP Solicit packet, a DHCP Advertisement packet is returned. The terminal device may select one of the DHCP servers that reply, and request the IP address and the configuration information from it, as shown in FIG. 3.

However, when the DHCP server adopts a DHCP manner to assign an IPv6 address to the terminal device, a direct route between the network segments of the assigned addresses fails to be generated between the terminal devices. In this way, during mutual access between the two terminal devices that obtain the IPv6 address with a same prefix from the same DHCP server, the packet may be forwarded only through a gateway device, or the packet may be directly forwarded between the two terminal devices only when the terminal devices both support redirection.

### SUMMARY

Embodiments of the present invention provide a method, an apparatus, and a system for a layer 2 interworking based on an IPv6. The provided method, apparatus, and system enable a direct route be implemented between terminal devices that obtain an IPv6 address with a same prefix from a same DHCP server.

An embodiment of the present invention provides a method for a layer 2 network interworking based on an IPv6. The layer 2 network includes a gateway device and a first terminal device and a second terminal device that connect to the gateway device. The method includes:
receiving a router solicitation packet of the first terminal device; and
sending a router advertisement packet to the first terminal device, where the router advertisement packet carries a management tag and a prefix option, and the prefix option carries an AdvOnlink tag, so that the first terminal device generates a direct route to the second terminal device according to the AdvOnlink tag; and
the management tag is used to direct the first terminal device to adopt a Dynamic Host Configuration Protocol to obtain an IP address.

An embodiment of the present invention provides a gateway device based on an IPv6, where the gateway device connects to a first terminal device and a second terminal device. The gateway device includes:
a first port, configured to receive a router solicitation packet of the first terminal device; and
a second port, configured to send a router advertisement packet to the first terminal device, where the router advertisement packet carries a management tag and a prefix option, the prefix option carries an AdvOnlink tag so that the first terminal device generates a direct route to the second terminal device according to the AdvOnlink tag, and the management tag is used to direct the first terminal device to adopt a Dynamic Host Configuration Protocol to obtain an IP address.

An embodiment of the present invention provides a terminal device, including:
a first network side port, configured to send a router solicitation packet to a gateway device;
a second network side port, configured to receive a router advertisement packet of the gateway device, where the router advertisement packet carries a management tag and a prefix option, the prefix option carries an AdvOnlink tag, and the management tag is used to direct the first terminal device to adopt a Dynamic Host Configuration Protocol to obtain an IP address; and
a processing unit, configured to generate a direct route to another terminal device that connects to the gateway device according to the AdvOnlink tag.

An embodiment of the present invention provides a system for a layer 2 interworking based on an IPv6. The system includes a gateway device, a first terminal device, and a second terminal device, where:
the gateway device is configured to receive a router solicitation packet of the first terminal device, and send a router advertisement packet to the first terminal device, where the router advertisement packet carries a management tag and a prefix option, and the prefix option carries an AdvOnlink tag; and
the first terminal device is configured to generate a direct route to the second terminal device according to the AdvOnlink tag, and adopt a Dynamic Host Configuration Protocol to obtain an IP address according to the management tag.

The method, apparatus, and system provided in embodiments of the present invention, by sending a router advertisement packet that carries a prefix option including an AdvOnlink tag and a management tag to a terminal device, may enable the terminal device to adopt a DHCP to obtain an IP address, and generate a direct route according to the AdvOnlink tag, thereby implementing interworking between multiple terminal devices to which an IPv6 address with a same prefix is assigned from a same DHCP server, in a broadcast domain.

### BRIEF DESCRIPTION OF DRAWINGS

To illustrate the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 to FIG. 3 are schematic diagrams of an interaction process of a terminal device and a DHCP server in the prior art;
FIG 4 is a schematic diagram of an architecture of a layer 2 network according to an embodiment of the present invention;
FIG. 5 shows an interaction of a method for a layer 2 network interworking according to an embodiment of the present invention;
FIG. 6 is a structural diagram of a router solicitation packet according to an embodiment of the present invention;
FIG. 7A and FIG 7B are structural diagrams of a router advertisement packet according to an embodiment of the present invention;
FIG. 8 is a schematic structural diagram of a gateway device according to an embodiment of the present invention; and
FIG 9 is a schematic structural diagram of a terminal device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part of embodiments of the present invention rather than all of the embodiments. All other embodiments obtained by a person of ordinary skill in the art based on the embodiments of the present invention without creative efforts shall fall within the protection scope of the present invention.

A gateway device may connect to multiple terminal devices. As shown in FIG. 4, a gateway device 40 connects to a terminal device 42 (a first terminal device) and a terminal device 44 (a second terminal device), where the terminal device 42 and the terminal device 44 may be in a broadcast domain.

The gateway device in FIG. 4 may be an IPv6 routing device, and may also be an access device or an aggregation device, for example, a DSLAM (Digital Subscriber Line Access Multiplexer, digital subscriber line access multiplexer), an OLT (Optical Line Terminal, optical line terminal), or an MSAN (Multi-Service Access Network, multi-service access network). The terminal device may be a CPE (Customer Premise Device, customer premise device), an ONT (Optical Network Terminal, optical network terminal), a user PC, or the like. The embodiment of the present invention does not limit specific forms of the gateway device and the terminal device.

When the terminal device obtains an IPv6 address from the DHCP server, because only an address is assigned and there is no prefix length information, the terminal device is only capable of generating a route with a default gateway and fails to generate a directly connected network segment route.

In view of this, the embodiment of the present invention provides a method for a layer 2 network interworking based on an IPv6. The provided method includes sending, by a gateway device, after receiving a router solicitation packet of a terminal device, a router advertisement packet to the terminal device, where the router advertisement packet carries a prefix option including an AdvOnlink tag and a management tag, to generate a direct route to another terminal device that connects to the gateway device according to the AdvOnlink tag, where the management tag is used to direct the terminal device to adopt a DHCP to obtain an IP address.

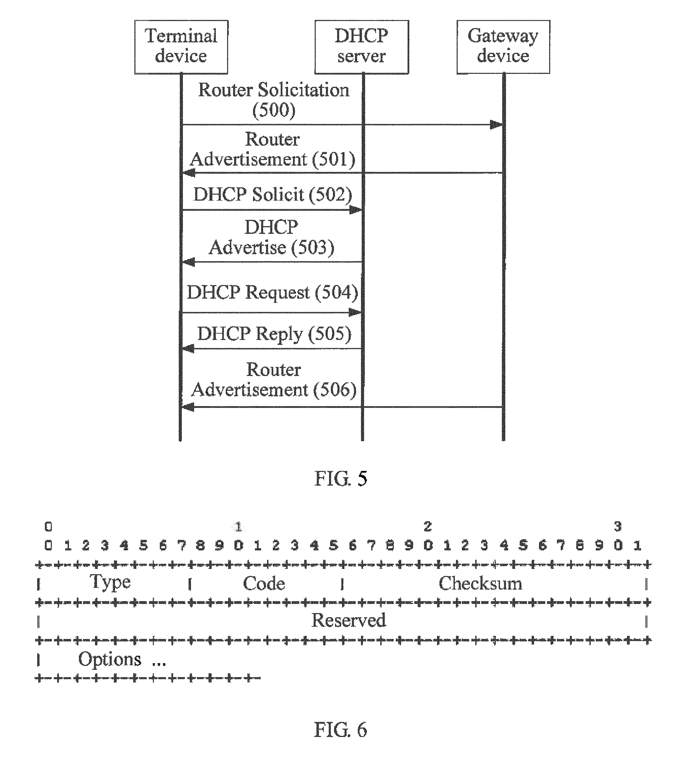

Specifically, as shown in FIG 5, the method includes the following steps:
Step 500: The terminal device sends a Router Solicitation packet to the gateway device.

The terminal device (for example, a terminal device 42), after starting, automatically generates a Link-Local address, and multicasts a Router Solicitation (router solicitation) packet according to a Link-Local address (FF02::2). A structure of the Router Solicitation packet may be similar to that shown in FIG. 6.

In the embodiment of the present invention, a gateway device 40 receives the Router Solicitation packet.

Step 501: The gateway device sends a Router Solicitation packet to the terminal device.

The gateway device obtains, based on configuration information, a manner in which the terminal device obtains the IP address, where the manner in which the terminal device obtains the IP address may include the DHCP and a stateless address autoconfiguration (Stateless Address Autoconfiguration, SLAAC).

In the embodiment of the present invention, the manner in which the terminal device obtains the IP address is the manner of the DHCP, and as an exemplary embodiment, may be a DHCPv6 manner.

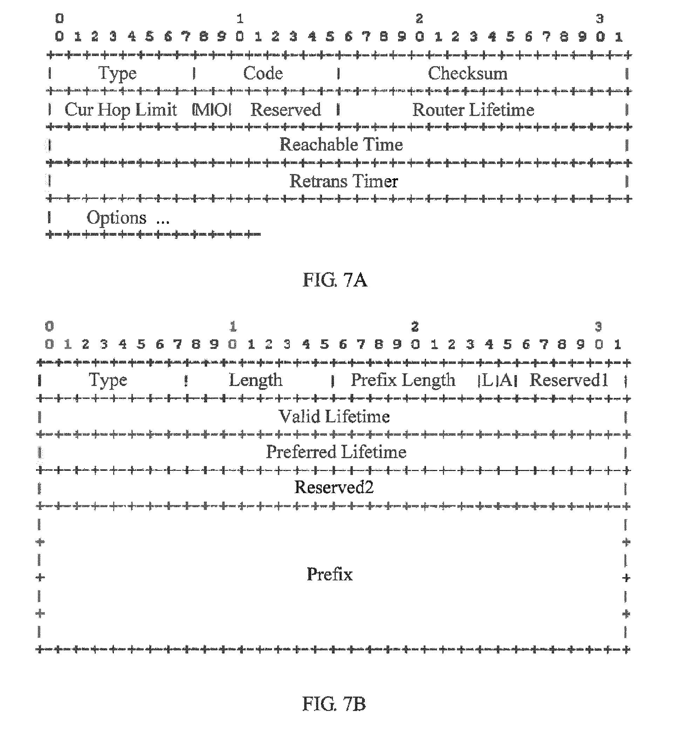

The gateway device unicasts a Router Advertisement (router advertisement) packet to the terminal device. As shown in FIG. 7A, the Router Advertisement packet carries the prefix option (Options) including the AdvOnlink (AdvOnlink, L) tag and the management (Management, M) tag. A format of the prefix option may be similar to that shown in FIG. 7B. The L tag is used for the terminal device to generate the direct route, and the M tag is used to indicate the manner adopted by the terminal device to obtain the IP address. In the embodiment of the present invention, the DHCP is adopted to obtain the IP address.

The prefix option of the Router Advertisement packet may also include an Autonomous tag, where the Autonomous tag is used by the terminal device to generate an address and should be set to 0 in this embodiment.

The Router Advertisement packet may also carry an O (Other) tag, which is used to direct the terminal device to obtain other configuration information.

After receiving the Router Advertisement packet, the terminal device generates the direct route to another terminal device that connects to the gateway device according to the L tag in the prefix option.

Specifically, after receiving the Router Advertisement packet and determining that a Router Advertisement packet carries the prefix option including the L tag, the terminal device generates a route where a prefix is a destination IP and a next hop is null.

Steps 502-505: The terminal device adopts the DHCP to obtain the IP address from the DHCP server.

After receiving the Router Advertisement packet, the terminal device selects a corresponding manner according to the M tag in the Router Advertisement packet to obtain the IP address. In this embodiment, the DHCP manner is selected. Persons of ordinary skill in the art should all know how to adopt the DHCP manner to obtain the IP address from the DHCP server, which is not described herein.

The method provided in this embodiment may further include the following step:
Step 506: The gateway device periodically sends the Router Advertisement packet to the connected terminal device.

The gateway device may periodically broadcast the Router Advertisement packet carrying the prefix option including the L tag to the connected terminal device, so that the connected terminal device generates the direct route according to the L tag.

The method provided in the embodiment of the present invention, by sending a router advertisement packet that carries a prefix option including an L tag and an M tag to a terminal device, may enable the terminal device to adopt a DHCP to obtain an IP address, and generate a direct route according to the L tag, thereby implementing a layer 2 interworking between multiple terminal devices to which an IPv6 address with a same prefix is assigned from a same DHCP server, under a broadcast domain.

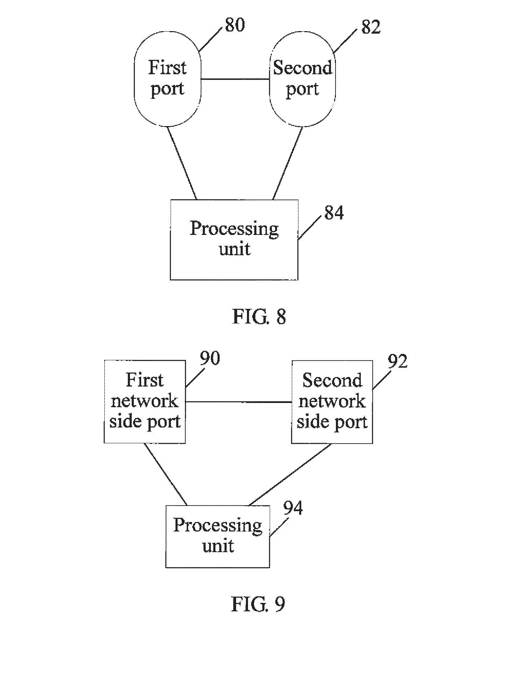

An embodiment of the present invention provides a gateway device. The provided gateway device connects to a first terminal device and a second terminal device, where the first terminal device and the second terminal device may be one to more terminal devices. As shown in FIG. 8, the gateway device includes:
a first port 80, configured to receive a Router Solicitation packet of the first terminal device; and
a second port 82, configured to send a Router Advertisement packet to the first terminal device, where the Router Advertisement packet carries a prefix option including an AdvOnlink tag and a management tag so that the first terminal device generates a direct route to the second terminal device according to the AdvOnlink tag, and the management tag is used to direct the first terminal device to adopt a DHCP to obtain an IP address.

The gateway device further includes a processing unit 84, configured to obtain a manner in which the terminal device obtains the IP address from configuration information, and generate the corresponding management tag to be carried in the Router Advertisement packet.

The processing unit 84 may be a CPU (Central Processing Unit, central processing unit), a DSP (Digital Signal Processing, digital signal processor), or the like.

The second port 82 is further configured to periodically broadcast the Router Advertisement packet to the connected terminal device, so that the terminal device that connects to the gateway device generates the direct route according to the AdvOnlink tag in the Router Advertisement packet.

The gateway device provided in this embodiment may be an IPv6 router, an access device, an aggregation device, or the like.

The first port 80 and the second port 82 provided in this embodiment may be one physical port or two independent physical ports on an actual device. A specific form is not limited in the embodiment of the present invention.

The gateway device provided in the embodiment of the present invention, by sending a Router Advertisement packet that carries a prefix option including an AdvOnlink tag and an management tag to a terminal device, may enable the terminal device to adopt a DHCP to obtain an IP address, and generate a direct route according to the AdvOnlink tag, thereby implementing, in a broadcast domain, interworking between multiple terminal devices to which IPv6 addresses with a same prefix are assigned by a same DHCP server.

An embodiment of the present invention provides a terminal device, as shown in FIG. 9, including a first network side port 90, a second network side port 92, and a processing unit 94, where the first network side port 90 and the second network side port 92 connect to a gateway device.

The first network side port 90 is configured to send a Router Solicitation packet to the gateway device.

The second network side port 92 is configured to receive a Router Advertisement packet of the gateway device, where the Router Advertisement packet carries a prefix option including an AdvOnlink tag and a management tag, and the management tag is used to direct the terminal device to adopt a DHCP to obtain an IP address.

The processing unit 94 is configured to generate a direct route to another terminal device that connects to the gateway device according to the AdvOnlink tag.

The processing unit 94 is further configured to send a DHCP request message to a DHCP server through the first network side port 90.

The second network side port 92 is further configured to receive a DHCP response message of the DHCP server, where the DHCP response message carries the IP address assigned to the terminal device.

In another embodiment of the present invention, the second network side port 92 is further configured to receive a Router Advertisement packet that is periodically sent by the gateway device, and generate a direct route to another terminal device that connects to the gateway device according to an AdvOnlink tag carried in the Router Advertisement packet.

The processing unit 94 may be a CPU (Central Processing Unit, central processing unit), a DSP (Digital Signal Processing, digital signal processor), or the like.

The terminal device in this embodiment may be a CPE, an ONT, or the like.

The first network side port 90 and the second network side port 92 provided in this embodiment may be a physical port or two independent physical ports on an actual device. A specific form is not limited in the embodiment of the present invention.

The terminal device provided in this embodiment, by obtaining the AdvOnlink tag and the management tag from the Router Advertisement packet, may generate the direct route according to the AdvOnlink tag, thereby implementing interworking between multiple terminal devices to which an IPv6 address with a same prefix is assigned from a same DHCP server, under a broadcast domain.

For an apparatus embodiment, because it basically corresponds to a method embodiment, it is simply described. For related description, refer to the description in a method embodiment. The described apparatus embodiment is only exemplary. Modules described as separate components may be or may not be physically separated. Components shown as modules may be or may not be physical modules, that is, may be integrated or distributed to multiple network modules. A part or all of the modules may be selected according to an actual need to achieve an objective of a solution of this embodiment. A person of ordinary skill in the art may understand and implement the solution without creative efforts.

A person of ordinary skill in the art may understand that all or a part of the steps of the methods in the foregoing embodiments may be implemented by a program instructing relevant hardware. The program may be stored in a computer readable storage medium, such as a ROM/RAM, a magnetic disk, or an optical disc.

The foregoing description of the disclosed embodiments enables a person skilled in the art to implement or use the present invention. Various modifications to these embodiments are apparent for persons skilled in the art. General principles defined in this specification may be implemented in other embodiments without departing from the spirit or scope of the embodiments of the present invention. Therefore, the embodiments of the present invention are not limited to these embodiments described in this specification, but shall extend to the widest scope that is consistent with the principles and novelties disclosed in this document.

## Claims

1. A method for a layer 2 network interworking based on an IPv6, wherein the layer 2 network comprises a gateway device and a first terminal device and a second terminal device that connect to the gateway device, comprising:
receiving a router solicitation packet of the first terminal device; and
sending a router advertisement packet to the first terminal device, wherein the router advertisement packet carries a management tag and a prefix option, and the prefix option carries an AdvOnlink tag, so that the first terminal device generates a direct route to the second terminal device according to the AdvOnlink tag; and
the management tag is used to direct the first terminal device to adopt a Dynamic Host Configuration Protocol to obtain an IP address.

2. The method according to claim 1, before the receiving the router advertisement packet of the first terminal device, further comprising:
obtaining a manner in which the first terminal device obtains the IP address from configuration information, wherein the manner comprises a Dynamic Host Configuration Protocol and a stateless address autoconfiguration.

3. The method according to claim 1, further comprising:
periodically broadcasting the router advertisement packet to a terminal device that connects to the gateway device, so that the terminal device that connects to the gateway device generates the direct route according to the AdvOnlink tag in the router advertisement packet

4. A gateway device based on an IPv6, connecting to a first terminal device and a second terminal device and comprising:
a first port, configured to receive a router solicitation packet of the first terminal device; and
a second port, configured to send a router advertisement packet to the first terminal device, wherein the router advertisement packet carries a management tag and a prefix option, the prefix option carries an AdvOnlink tag so that the first terminal device generates a direct route to the second terminal device according to the AdvOnlink tag, and the management tag is used to direct the first terminal device to adopt a Dynamic Host Configuration Protocol to obtain an IP address.

5. The gateway device according to claim 4, wherein the second port is further configured to periodically broadcast the router advertisement packet to a terminal device that connects to the gateway device, so that the terminal device that connects to the gateway device generates the direct route according to the AdvOnlink tag in the router advertisement packet.

6. A terminal device, comprising:
a first network side port, configured to send a router solicitation packet to a gateway device;
a second network side port, configured to receive a router advertisement packet of the gateway device, wherein the router advertisement packet carries a management tag and a prefix option, the prefix option carries an AdvOnlink tag, and the management tag is used to direct the first terminal device to adopt a Dynamic Host Configuration Protocol DHCP to obtain an IP address; and
a processing unit, configured to generate a direct route to another terminal device that connects to the gateway device according to the AdvOnlink tag.

7. The terminal device according to claim 6, wherein:
the processing unit is further configured to send a DHCP request message to a Dynamic Host Configuration Protocol DHCP server through the first network side port; and
the second network side port is further configured to receive a DHCP response message of the DHCP server, wherein the DHCP response message carries the IP address assigned to the terminal device.

8. The gateway device according to claim 6, wherein:
the second network side port is further configured to receive the router advertisement packet that is periodically sent by the gateway device.

9. A layer 2 interworking system based on an IPv6, comprising a gateway device, a first terminal device, and a second terminal device, wherein:
the gateway device is configured to receive a router solicitation packet of the first terminal device, and send a router advertisement packet to the first terminal device, wherein the router advertisement packet carries a management tag and a prefix option, and the prefix option carries an AdvOnlink tag; and
the first terminal device is configured to generate a direct route to the second terminal device according to the AdvOnlink tag, and adopt a Dynamic Host Configuration Protocol to obtain an IP address according to the management tag.

10. The system according to claim 9, wherein the gateway device is further configured to periodically broadcast the router advertisement packet to a connected terminal device, so that the direct route is generated between the connected terminal devices.
